(19) Europäisches Patentamt
European Patent Office
Office européen des brevets

(11) EP 4 101 280 A1

(12) EUROPEAN PATENT APPLICATION

(43) Date of publication:
14.12.2022  Bulletin 2022/50

(51) International Patent Classification (IPC):
$A01C\ 21/00^{(2006.01)}$     $G06Q\ 50/02^{(2012.01)}$

(21) Application number: 22152629.6

(22) Date of filing: 21.01.2022

(52) Cooperative Patent Classification (CPC):
A01C 21/00; G06Q 50/02

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.01.2021  FR 2100906

(71) Applicant: Polyor SAS
54000 Nancy (FR)

(72) Inventor: Claude, Pierre-Philippe/
54000 Nancy (FR)

Remarks:
A request for correction ...... has been filed pursuant
to Rule 139 EPC. A decision on the request will be
taken during the proceedings before the Examining
Division (Guidelines for Examination in the EPO, A-V,
3.).

(54) **AGRONOMIC METHOD FOR EVALUATING, BENCHMARKING AND IMPROVING THE SUSTAINABILITY OF CURRENT CROPPING PRACTICES**

(57) **Agronomic method for evaluating, benchmarking and improving the sustainability of current cropping practices.**

Figure 1

**Description**

Farmers need to know whether current cropping practices and their corresponding target yield are sustainable. (i) Is the current cropping practice feasible sustainable given intrinsic productivity of the field plot? If so, (ii) how can target yield be sustainably increased by modifying using innovative inputs and what is the efficacy of these inputs? Given a certain efficacy, (iii) what are now the optimum N, P & S fertilizers recommendations for maximum grain protein yield per unit (RUN) fertilizer? And finally, (iv) how can we reduce intra-plot yield variability especially in terms of residual post-harvest mineral nitrogen residues?

Advantageously, the farmer must be able to evaluate by and for him/herself the effectiveness of innovative inputs without the use of strip-plots as untreated controls. This makes it possible to impartially evaluate the agronomic effectiveness of these solutions in complete autonomy vis-à-vis agro-distribution. In this sense, a previous invention - EP3821688 - makes it possible to detect in situ treatment effects (eTRT) without resorting to the usual control plots sources of sampling error, inaccuracies and bias.

It's also necessary to assess the sustainability of current cropping practices prior to the use of such innovative inputs. This will have to be done more objectively, less qualitatively and without resorting to subjective, arbitrary or even political concepts, such as organic and biodynamic agriculture, high environmental value, ecologically intensive farming, etc.

EP3821688 does not necessarily indicate the level of sustainability by specifying, for example, whether these target yields are *normal* in the agro-pedoclimate in which the plot is located. EP3821688 makes it possible to know what the effect of an input - a *crop onput* or *biostimulant* for instance - will attain this target yield, but not if this level of yield is relatively high or low compared to the agro-pedoclimatic potential of the plot. Therefore, one seeks to know not only if innovative treatments increase target yields, but also to what extent these increases are sustainable.

A priori, there are therefore several techniques to assess this *sustainability* of a cropping practice at the plot level, namely;

a. *Critical thresholds:* Despite soil productivity losses due to soil degradation over time, soil productivity can be maintained but only up to a certain critical threshold established using dynamic *process-based* models such as EPIC (erosion-productivity impact *calculator* - https://epicapex.tamu.edu/, Sharpley and Williams 1990). In practice these thresholds are thus of little or no use for the routine assessment of sustainability at the plot level since they require a large number of accurately measures soil and climate variables.

b. *Multi-criteria indice* (Lairez et al. 2016, Guyomard et al. 2017): These are often very qualitative and most appropriate for the evaluation of governmental programs but much less so for routine agronomic consultancy at the plot level. The quantification of such analyses and evaluation is indicative, at best. For example, sustainable agriculture should be - by definition - less dependent on synthetic chemical inputs. Labelling cropping practices as having "high environmental value", being "ecologically intensive" or providing "ecosystem services" are very telling but not informative as to the inherent sustainability of the cropping practices.

c. *Multi-year and multi-location averages*: As rules, criteria or sustainability indices, these standards - usually simple averages - are not in themselves very useful. Since they are generally geographically quite encompassing and cannot directly be used at the plot level. Yield gaps between such regional averages and modelled potential yields (Schils et al. 2018) can reveal the *upper-boundaries* (Milne et al. 2006a, 2006b) useful for policy analysis but inapplicable at the individual field-plot level.

*Pedoclimatic references* as in EP3821688: Initially, the problem consisted in estimating in situ without the use of control sub-plots or -strips the relative efficacy of innovative inputs being assayed so as to calibrate N, P & S fertilizer recommendations. EP3821688 replaced the usual control strips plots by *agro-pedoclimatic* (APC) references - rSQs - obtained by meta-modeling of geolocated agro-pedoclimatic variable data (Var_APC). This more precise and impartial approach procures more autonomy for the farmer vis-à-vis agribusiness. That said, EP3821688 as it stands does not indicate whether this relative input efficacy is *desirable* or whether the resulting yield increase is sustainable per se.

The technical problem now resides in our inability to establish simply and objectively for any given plot a priori regardless the level of intensification or extensification of a current cropping practice is *sustainable* per se. Presently, the routine evaluation & benchmarking of sustainability at the plot level is either too expensive, qualitative, or subjective.

EP3821688 determines the efficacy of any assayed treatment (TRT). Grain (RDT, _rdt), grain protein (RDN, _rdn) and grain protein per unit of N fertilizer (RUN, _run) yield are adjusted by some index of the *intrinsic* productivity of the plot, for instance iSQ (Toth et al. 2013), so that such yields from widely different plots can be compared. RSQ = yield/iSQ, is then compared to an APC reference (r) for the plot so that eRSQ = RSQ/rRSQ. Similarly for the efficacy of ASQ, i.e. eASQ a proxy for the effect of meteorology inferred from local or regional yield averages, and QSQ, i.e. eQSQ a proxy of target yield for a particular plot inferred from local five-year moving averages. This results in a triple adjustment (Equation 1) - quadruple if we consider that RSQ, ASQ and QSQ are themselves ratios of iSQ;

Equation 1 (see Figure 2, EP3821688):

$$eTRT = \left[\frac{RSQ}{rRSQ} - 1\right] - \left[\frac{QSQ}{rQSQ} - 1\right] - \left[\frac{ASQ}{rASQ} - 1\right]$$

As explained in EP3821688, this additive implementation of the invention is sometimes difficult since the scale of the pedoclimatic data for QSQ & ASQ are very different from that of RSQ at the plot level, and a priori the errors associate for these three sources of yield variability are not commensurable or additive, at this stage of EP3821688's development anyway. eASQ & eQSQ can thus be themselves be determined directly by some sort of boosting or so-called artificial intelligence (AI) algorithm, such as gbm (R®) for instance;

Equation 2 (fig. 2, EP3821688):

$$eTRT = gbm(Var\_APC, eRSQ, eASQ, eQSQ) \approx gbm(latitude, longitude)$$

RSQ, ASQ and QSQ are observed input data. The idea is to find the pedoclimatic references, rRSQ, rASQ & rQSQ for a particular plot. Thus, three separate AI-like gbm models are proposed in EP3821688. rRSQ can also be determined as a function not only of the pedoclimatic and agronomic variables (Var_APC) but also of the values eASQ = ASQ/rASQ and eQSQ = QSQ/rQSQ;

Equation 2-bis (fig. 2, EP3821688):

$$rTSQ = gbm(Var\_APC, eASQ, eQSQ)$$

However, if ***eTRT ≡ 0.00*** as is necessarily the case when the *current* cropping practice is *unmodified*;

Equation 3:

$$eRSQ = eQSQ + eAQS$$

The efficacy RSQ/rRSQ = eRSQ is thus a function of target yield as a ratio of its own agro-pedoclimatic reference, eQSQ = QSQ/rQSQ, and meteorology as a ratio of its own pedoclimatic reference, eASQ = ASQ/rASQ. eRSQ when eTRT ≡ 0.00 is indeed a measure of sustainability according to Bruntland 1987 and Guyomard et al. 2017 because it includes the notion of target yield compatible with a certain agro-pedoclimatic reference beyond which yields would be too intensive to be environmentally sustainable. Indeed, the target yield - if known - is not a priori necessarily sustainable since two neighboring plots with comparable target yields may have very different iSQ values.

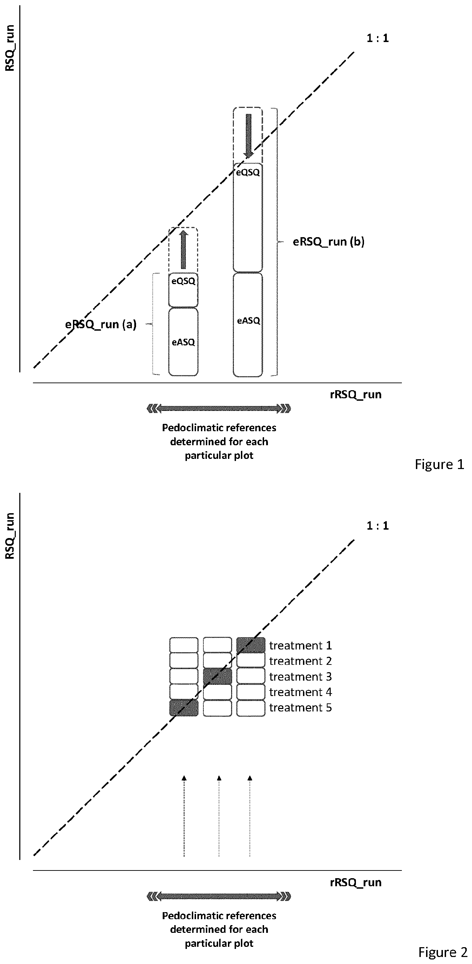

The sustainability of the target yield can now be evaluated as a match between the observed yield (RSQ) and its agro-pedoclimatic reference (rRSQ) given that eRSQ = eQSQ + eASQ (Figure 1) is the sum of these two manageable components, eASQ & eQSQ. This may, for example, involve an increase in the target yield using varieties adapted to colder climates to soils richer in organic matter as is sometimes the case in Finland. On the contrary, to improve sustainability, it may be necessary to recommend a reduction in target yields and leguminous intercrops bringing nitrogen to the soil on soils rather poor in organic matter in regions with warmer climates with higher NPPs *(net primary productivity)* as is sometimes the case in southern Europe.

Setting rRSQ = RSQ when eTRT ≡ 0.00 provides a normalized, objective and non-ideological benchmark indicator of sustainability at the plot level. This *benchmark sustainability* is determined using agro-pedoclimatic variables (Var_APC). The resulting estimates of plot, local and regional yields are adjusted using by iSQ to facilitate the comparison and aggregation of yield data from different agro-pedoclimates across Europe. An eRSQ value for a plot that is too high compared to this 1:1 sustainability benchmark (**Figure 1**) will be deemed unsustainable. On the contrary, low eRSQ values indicates sub-optimum resource utilization and will also be deemed unsustainable according to Brundtland 1987; yield increases through higher input use will be recommended. This second scenario seems to be the most frequent and augurs well for European agriculture.

Thus, when eTRT ≡ 0.00 in reference to equations 1 & 2 in EP3821688, **rTSQ = rRSQ**, rRSQ here being a *reference yield* prior to any modification of the *current* cropping practice being assessed as to its level of sustainability. Stating that when eTRT ≡ 0.00 → rTSQ = rRSQ distinguishes between current cropping practice and treatment efficacy (EP3821688). Herein and for now, TSQ and RSQ can thus be used interchangeably in agreement with Equation 1 and EP3821688.

The present invention is thus an **agronomic method for evaluating, benchmarking and improving the sustainability of current cropping practices** at the field-plot level comprised of the following steps;

- the determination of an *agro-pedoclimatic yield reference,* rRSQ, for the field plot,
- the determination of RSQ defined as the yield with the current cropping practice divided by some iSQ index of the inherent productivity of the field plot,
- the comparison of RSQ and rRSQ as in eRSQ = RSQ/rRSQ,

given that overall net treatment effect of the cropping practice eTRT = [eRSQ - eQSQ - eASQ] when eASQ = ASQ/rASQ and eQSQ = QSQ/rQSQ thus integrating into eTRT non only current cropping practice yield level (R) but also target yield level (Q) and the current average local or regional yield (A) as affected by meteorology, knowing that QSQ is the said target yield divided by iSQ and ASQ the local or regional yield potential affected by the current annual meteorology divided by some local or regionalized value of iSQ, rQSQ and rASQ being for their part agro-pedoclimatic (APC) references applicable to QSQ & ASQ,
characterized in that;

- **eTRT is set to zero as in eTRT $\equiv$ 0, and therefore eRSQ = [eQSQ + eASQ]**

and further characterized in that;

- cropping practices are deemed sustainable when RSQ = rRSQ such that,
- if and when RSQ - rRSQ is a *positive* value, the current cropping practice is deemed *too intensive* (high) and target yields must be reduced to maintain sustainability,
- if and when RSQ - rRSQ is a *negative* value, the current cropping practice is deemed too *extensive* (low) and target yields can be increased while maintaining sustainability,
- the current cropping practice's sustainability is assayed by the vertical distance separating the observed RSQ and its corresponding rRSQ reference on an [y:x] graph given that sustainability is optimal if and when RSQ = rRSQ as depicted by a straight 1:1 [y:x] graph,

thus allowing for a calibrated modification of the current cropping practice, target yields and ensuing N-fertilizer recommendations when RSQ and rRSQ are *not* sufficiently similar, the efficacy of such modifications of current unsustainable cropping practices being thus and then reassessed using in situ agronomic experimentation protocols applicable to *integrated fertilizer management* (ifm).

RSQ & rRSQ are deemed sufficiently similar when the difference between RSQ and rRSQ expressed in terms of RUN, as in RSQ_run & rRSQ_run, is +/- 5 to 15%, more specifically +/- 8 to 12% and advantageously approximately +/- 10% that of rRSQ. RSQ & rRSQ are expressed in terms of RUN ($uN_{grain}/ uN_{fertilizer}$) i.e. grain protein yield / kg-N of N_fertilizer (TUN; $kg-N_{fertilizer}$/hectare) calculated as the ratio $run^2/ d_{run}$ given that run is the *gross* unit yield divided by $d_{run} = [a \cdot TUN^{-b}]$ and that **a** and **b** are unique empirical coefficients applicable to all plots describing the gradual decrease of run with increasing TUN.

rRSQ, rQSQ and rASQ are determined, as in EP3821688, by relating observed crop yield data and an array of agro-pedoclimatic variables (Var_APC) using an automated machine, or model, learning algorithm, preferably of the boosting type, i.e. an automated learning technique for regression and classification problems which produces stepwise a prediction model in the form of an ensemble of weak predictors via an optimization of arbitrary differentiable loss functions to convert these weak learners into powerful ones iteratively.

Once the various aforesaid rRSQ references are obtained, via EP3821688 for instance, and since eTRT $\equiv$ 0.00, sustainability is inferred when RSQ is approximately equal to rRSQ as represented graphically by a 1:1 benchmark in Figures 1 to 9. If RSQ is *close* to rRSQ, the harvesting and export of nutrients from the plot are considered sustainable, probably do not exceed the agro-pedoclimatic capacities of the soil and the risk of soil depletion or depletion is limited (**Figure 1**). If the level of agronomic production RSQ is much *higher* than rRSQ, the cropping practices are deemed unsustainable and an extensification of these is recommended. Note that unlike EP3821688, rRSQ calculations now use data from experimental plots with multiple treatments from which the most sustainable is retained. rRSQ is a function of complementary agro-pedoclimatic, this dataset being advantageously as large as possible in order to make the geographical extrapolation of the predictive model more robust.

**Figure** 1: The additivity of eASQ and eQSQ fully explains the deviation of different target yields from an ideal 1:1 benchmark line depicting socio-economic & environmental sustainable agriculture (Brundtland et al. 1987, Guyomard et al. 2017). In practice, eRSQ = yields/iSQ can only be modified by adjusting the target yield (Q) as a function of cropping practice since meteorology (A) is hardly manageable.

Again, if this target yield is *below* the 1:1 benchmark → RSQ = rRSQ, eQSQ is too low and can increase while remaining sustainable. If eRSQ is *beyond* this 1:1 benchmark and RSQ larger than rRSQ, the target yield and its QSQ analogue are too high and must be lowered *by extensifying (sic)* the current cropping practice for the sake of sustainability. For example, here on a plot eRSQ_run (a) is significantly below (dotted) from the benchmark 1:1 sustainability. On the other plot (b), the situation is very different since eRSQ_run is beyond sustainability.

Adjusted rRSQ values in relation to RSQ identify the most sustainable treatments (**Figure 2**). Depending on the positioning of this plot specific rRSQ pedoclimatic reference, the treatments closest to the 1:1 benchmark deemed sustainable will vary. rRSQ is a better benchmark of sustainability than mere target (rQSQ) and/or regionally averaged yields (rASQ). This is mainly a result of the aforesaid RUN = $run^2/d_{run}$ normalization which measure true variations in N-fertilizer use efficiency *independently* of TUN. rRSQ is also a form of *collective intelligence* since plots with intrinsically similar yield potentials will have similar rRSQs thus forming a sort of leading pack (*peloton,* fr) to which one should advantageously stick to.

**Figure** 2: The specificity of rRSQ for a given plot makes it possible to compare several treatments simultaneously. For example, only treatments (RSQ) closest to the 1:1 benchmark (dark rectangles) give sustainable RDT, RDN and/or RUN. rRSQ thus dictates which treatment combination will be considered sustainable. For instance here, a low rRSQ will indicate that treatment 5 is sustainable, while higher rRSQ values will retain treatments 1 or 3 instead.

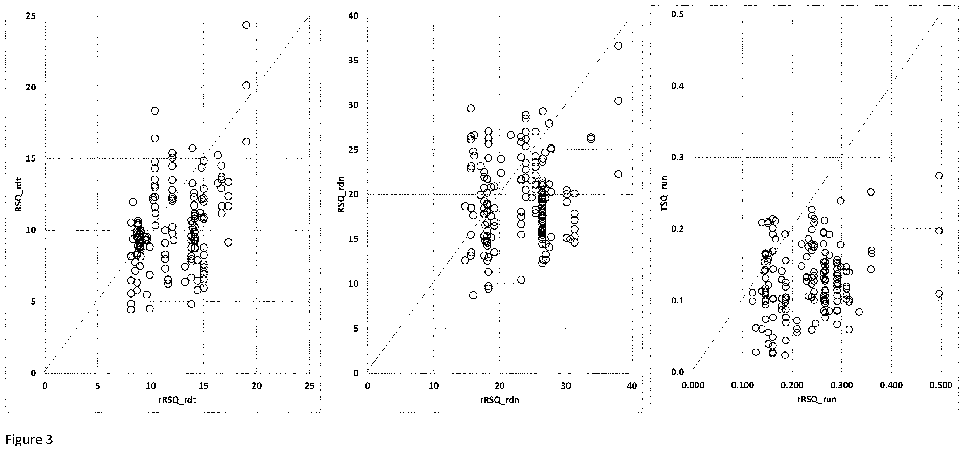

The invention can be implemented and validated in various ways. For each plot, a single rRSQ can be identified by a series of points arranged vertically (**Figure 3**). making it possible to evaluate the different treatments being tested on a single plot against the rRSQ = RSQ sustainability benchmark (Figure 1). Again, RUN will to some extent dictate sustainability (**Figure 3**). RDT and RDN less so since RDT can increase without increasing RDN and vice versa. RSQ_rdt and RSQ_rdn are distributed on either side of the benchmark 1:1 while it is mainly the higher RSQ_run that are closest to it , RSQ_run are overwhelmingly *below* the benchmark 1:1. Higher RUN values is thus synonymous with soil conservation and sustainable agriculture. RUN = $run^2/d_{run}$ is therefore the most appropriate criteria of sustainability. Increased RUN also improves the energy efficacy N-fertilizer production is energy intensive.

**Figure** 3 : Some of the approximately 800 experimental sites (Table 1) comprising almost 9000 treatments (Table 2), the closest to the aforesaid 1:1 benchmark deemed sustainable in terms of RUN (rRSQ_run). Note that the highest RSQ_run are also most often the closest to the 1:1 sustainability benchmark. In terms of sustainability, higher RUNs lead to lower post-harvest residual mineral nitrogen that otherwise tend to prime soil organic matter degradation. This is why on average treatments with RSQ_run values closest to rRSQ_run have higher RUN and are thus deemed more sustainable.

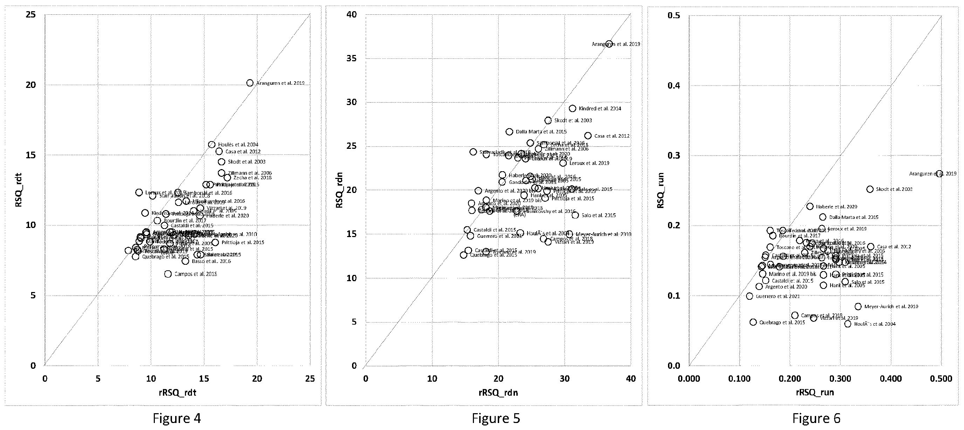

RSQ values from coldest sites are a priori the least productive (eg. Finland, Prittioja et al. 2015 - **Figures 4, 5 & 6**) are also somewhat removed from the 1:1 sustainability benchmark. The pedoclimatic resource and its nutrient reserves are therefore underexploited and could in principle be intensified sustainably. This is not the case in warmer temperate agro-pedoclimates already producing high yields or in more arid soils in southern Europe (eg. Tocano, Castaldi, Agrento, etc. in Figures 4, 5 & 6).

**Figure** 4 : RSQ_rdt of soft wheat (BTH) and hard wheat (BDH). These values RSQ_rdt come from experimental sites with multiple treatments; only the most sustainable and therefore likely to be adopted by the farmer. Some RSQ_rdt values are clearly below the 1:1 sustainability benchmark (Figure 4); a priori, the corresponding grain-yields (RDT) could be increased sustainably, as it the case with rRSQ_run and grain-protein yields (RDN) in **Figure 5**.

**Figure** 6: Example of application of the invention in terms of RSQ_run (Table 2) specific to grain-protein yield per unit of N-fertilzer (RUN) of soft and durum wheat in Europe; see explanations in Figure 4. Again, there higher RSQ_run values are indicative of sustainability as defined herein benchmark sustainability 1:1 → RSQ_run = rRSQ_run.

Some treatments contribute more than other at a particular site given its unique rRSQ_run. For instance, a certain N-fertilizer application rate (eg. TUN = 145; **Figure 7**), or again particular winter wheat cultivars (**Figure 8**) can be deemed more sustainable that others. The efficacy of variable rate application (VRA) technologies can also be assessed for a particular site (**Figure 9**). For instance, the efficacy of VRA could well be site specific and not necessarily superior to uniform rate let alone sustainable since they too can at times (eg. Site 2) be quite different from the 1:1 benchmark sustainability as defined herein.

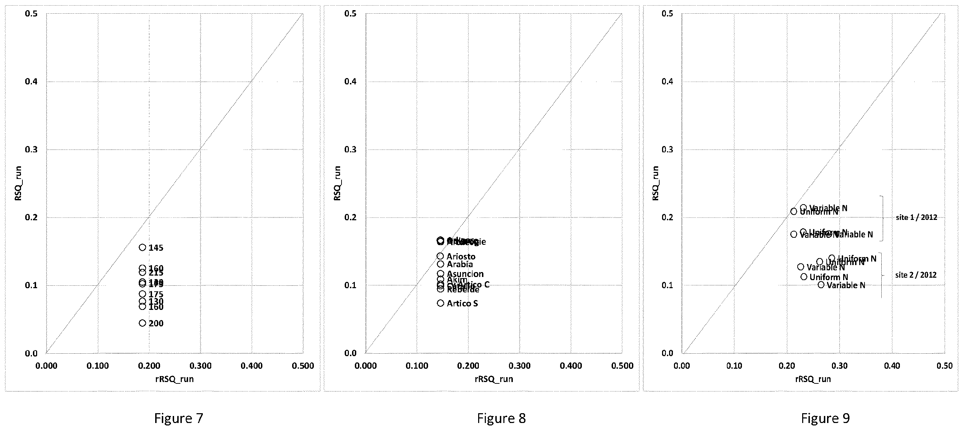

**Figure 7** (Morari et al. 2017) : In reference to Figures 1 & 2, only the N-fertilization rate (TUN) of 145 units of nitrogen (uN) on durum winter wheat (BDH) is here deemed sustainable.

**Figure 8** (Marino et al. 2019, 2019 bis) : In reference to Figures 1 & 2, various winter durum wheat cultivars seemingly differ in their ability to contribute to sustainability, cv. Artico S for instance having rTSQ_run - and thus RUN - too low to be sustainable.

**Figure 9** (Samborski et al. 2016) : The invention also makes it possible to evaluate the agronomic efficacy and sustainability of variable N-fertilizer rate application technologies. For example, on soft winter wheat to two different sites, uniform as opposed to variable rate application does not seem to be detrimental in terms of sustainability and/or RUN at site 1; overall $N_{fertilizer}$ rates a site 2 in 2012, independently of application technology (variable or uniforme) could, or should!, however be increased sustainably.

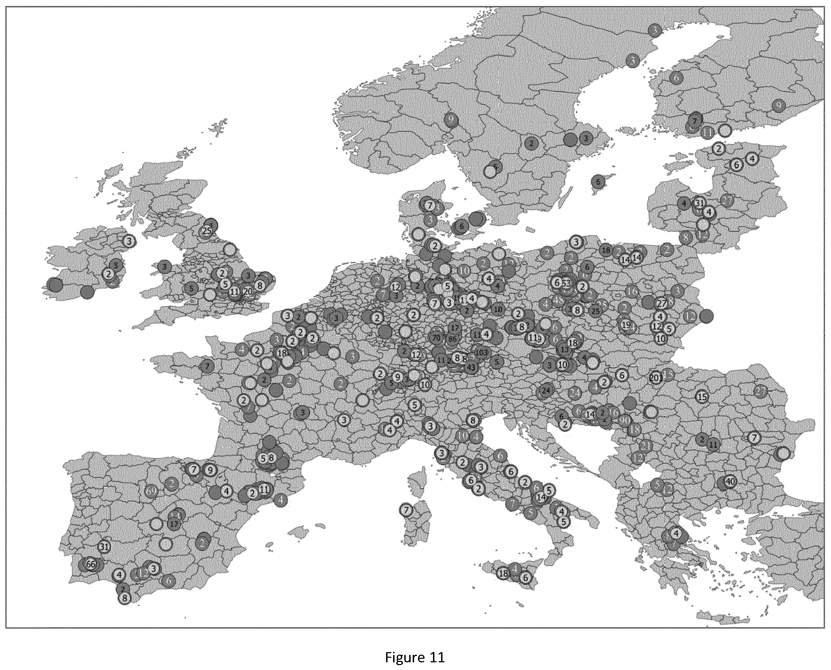

**Table 1:** Some of the 800 or so geo-localized experimental, trial and on-farm sites (**Figure 11**) for various field crops (CLT) such as winter wheat (BTH) and durum winter wheat (BDH), and cellulosic soil borne crop residues (RCS) such as maize (ZEA), wheat, rapeseed (CLZ) and legumes (LEG), potatoes (PDT) and legumes (LEG). Target yields (Q; qx/ha) are most often regional five-year moving averages across mapping units such as NUT2. Each site-year-reference contains multiple treatments as in Figure 3, some of which close to the rRSQ_run 1:1 benchmark as defined herein. These (Table 2) will then be retained and integrated into the AgroNum™-rRSQ model prior to reiteration using still more yield data. And so on.

| Harvest | code_NUTS2 | Reference | LAT_wgs84 | LON_wgs84 | CLT | Q | RCS |
|---|---|---|---|---|---|---|---|
| 2010 | DEE0 | Hank et al. 2005 | 51.4200 | 11.3500 | BTH | 76.04 | ZEA |
| 2009 | FI1C | Salo et al. 2015 | 60.4200 | 23.3000 | BTH | 39.71 | BTH |
| 2009 | FI1C | Prittioja et al. 2015 | 60.8100 | 23.5000 | BTH | 39.71 | BTH |
| 1991 | AED2 | Prittioja et al. 2015 | 50.8100 | 6.9500 | BTH | 83.74 | BTH |
| 2006 | ES51 | Prittioja et al. 2015 | 41.6300 | 0.6000 | BTH | 36.9 | BTH |
| 2017 | ITF4 | Toscano et al. 2019 | 41.2706 | 15.3044 | BDH | 23.77 | BDH |
| 2016 | ITF4 | Toscano et al. 2019 | 41.2706 | 15.3044 | BDH | 23.76 | BDH |
| 2015 | ITF1 | Marino et al. 2019 | 42.7229 | 13.9139 | BDH | 43.04 | LEG |
| 2012 | ITI4 | Castaldi et al. 2015 | 41.8521 | 12.2534 | BTH | 40.96 | BTH |
| 2012 | ITI4 | Castaldi et al. 2015 | 41.8521 | 12.2534 | BTH | 40.96 | BTH |
| 2010 | DEE0 | Hank et al. 2005 | 51.4200 | 11.3500 | BTH | 76.04 | ZEA |
| 2010 | DEG0 | Hank et al. 2005 | 51.4000 | 11.0000 | BTH | 76.8 | ZEA |
| 2009 | FI1C | Salo et al. 2015 | 60.4200 | 23.3000 | BTH | 39.71 | NA |
| 1991 | AED2 | Prittioja et al. 2015 | 50.8100 | 6.9500 | BTH | 83.74 | NA |
| 2004 | UKC2 | Leroux et al. 2019 | 55.3700 | -1.6200 | BTH | 77.86 | CLZ |
| 2015 | SS22 | Aranguren et al. 2019 | 42.5100 | -2.3700 | BTH | 44.57 | CLZ |
| 2006 | DE21 | Gandorfer et al. 2011 | 48.5000 | 11.4500 | BTH | 76.56 | ZEA |
| 2019 | CH05 | Argento et al. 2020 | 47.4790 | 8.9059 | BTH | 51.6 | ZEA |
| 2010 | ITF4 | Tedone et al. 2017 | 40.8800 | 16.2800 | BTH | 23.77 | BDH |
| 2016 | ES42 | Campos et al. 2018 | 39.2808 | -1.9778 | BTH | 24.06 | BTH |
| 2014 | ES61 | Quebrago et al. 2015 | 37.4555 | -5.4337 | BTH | 23.95 | BTH |
| 2015 | ITF1 | Marino et al. 2019 bis | 42.7229 | 13.9140 | BDH | 43.04 | LEG |
| 2001 | DK02 | Skodt et al. 2003 | 55.6851 | 12.1037 | BTH | 87.68 | BTH |
| 2018 | ITI2 | Vizzari et al. 2019 | 42.9507 | 12.3818 | BTH | 58.57 | LEG |
| 2016 | FRF2 | Bourdin et al. 2017 | 48.8080 | 4.7400 | BDH | 62.94 | BDH |
| 2000 | FRE2 | Casa et al. 2012 | 49.5833 | 3.6500 | BTH | 77.04 | BTH |
| 2000 | FRB0 | Houlès et al. 2004 | 49.5833 | 3.6500 | BTH | 66.23 | BTH |
| 2018 | BE24 | Guerrero et al. 2021 | 50.7838 | 5.1082 | BTH | 84.45 | BTH |
| 2018 | CH05 | Argento et al. 2020 bis | 47.4790 | 8.9059 | BTH | 51.6 | BTH |
| 2010 | ITF4 | Basso et al. 2016 | 41.4578 | 15.5040 | BDH | 22.25 | BDH |
| 2011 | ITH3 | Morari et al. 2017 | 45.3743 | 12.0544 | BDH | 64.2 | BDH |
| 2004 | DE14 | Zillmann et al. 2006 | 48.7400 | 8.9300 | BTH | 72.52 | BTH |
| 2016 | EL61 | Stamatiadis et al. 2018 | 39.5250 | 22.5144 | BTH | 39.35 | BTH |
| 2012 | PL63 | Samborski et al. 2016 | 54.5000 | 17.3000 | BTH | 56.06 | PDT |
| 2017 | CZ06 | Haberle et al. 2020 | 49.5046 | 15.2330 | BTH | 55.88 | BTH |
| 2019 | CZ02 | Haberle et al. 2020 | 50.2757 | 14.7927 | BTH | 55.88 | BTH |
| 2012 | UKF1 | Kindred et al. 2014 | 51.8000 | -1.6666 | BTH | 85.11 | BTH |
| 2007 | DEE0 | Meyer-Aurich et al. 2010 | 51.6333 | 11.5666 | BTH | 75.41 | BTH |
| 2012 | DE13 | Zecha et al. 2018 | 48.7452 | 8.9238 | BTH | 72.52 | CLZ |
| 2004 | CZ04 | Hlisnikovshy et al. 2016 | 50.8358 | 14.2917 | BTH | 46.18 | LEG |
| 2012 | ITI1 | Dalla Marta et al. 2015 | 43.0500 | 11.7222 | BDH | 35.09 | BDH |
| 2010 | UKH2 | Perryman et al. 2018 (eRA) | 51.8115 | -0.3733 | BTH | 84.51 | BTH |
| etc. | etc. | etc. | etc. | etc. | etc. | etc. | etc. |
| etc. | etc. | etc. | etc. | etc. | etc. | etc. | etc. |
| etc. | etc. | etc. | etc. | etc. | etc. | etc. | etc. |

Table 2: Some of the 9000 or so yield data, some of which will be retained for integration into the rRSQ-AgroNum™ model if and when their RSQ_run are close (+/- 0.015) to the rRSQ_run benchmark. After integrating these observations into the existing rRSQ-AgroNum™ dataset, the process is reiterated thus progressively and iteratively increasing the predictive power and precision of the model.

| Reference | treatment | RTD | PRT | TUN | RDN | RUN | RSQ_run | rRSQ_run |
|---|---|---|---|---|---|---|---|---|
| Hank et al. 2005 | modelled | 66.6 | 2.04 | 133 | 135.98 | 1.145 | 0.16 | 0.19 |
| Hank et al. 2005 | harvested | 61.1 | 1.96 | 122 | 119.40 | 0.921 | 0.13 | 0.18 |
| Salo et al. 2015 | harvested | 44.6 | 2.77 | 90 | 123.27 | 1.144 | 0.17 | 0.30 |
| Prittioja et al. 2015 | harvested | 51.2 | 2.58 | 102 | 131.85 | 1.228 | 0.18 | 0.33 |
| Prittioja et al. 2015 | harvested | 86.9 | 1.63 | 174 | 141.19 | 1.080 | 0.15 | 0.26 |
| Prittioja et al. 2015 | harvested | 86.2 | 1.59 | 172 | 137.35 | 1.026 | 0.18 | 0.20 |
| Toscano et al. 2019 | modelled | 39.0 | 2.93 | 105 | 114.33 | 0.911 | 0.19 | 0.16 |
| Toscano et al. 2019 | harvested | 50.0 | 2.44 | 105 | 122.02 | 1.038 | 0.22 | 0.16 |
| Marino et al. 2019 | cv Ariosto | 57.3 | 2.11 | 115 | 121.17 | 0.978 | 0.16 | 0.15 |
| Castaldi et al. 2015 | modelled | 59.9 | 2.29 | 240 | 137.43 | 0.871 | 0.15 | 0.15 |
| Castaldi et al. 2015 | harvested | 47.8 | 3.28 | 243 | 156.96 | 1.129 | 0.19 | 0.16 |
| Hank et al. 2005 | modelled | 66.6 | 2.22 | 133 | 147.58 | 1.348 | 0.19 | 0.19 |
| Hank et al. 2005 | harvested | 61.1 | 2.08 | 122 | 126.74 | 1.038 | 0.15 | 0.18 |
| Salo et al. 2015 | harvested | 44.6 | 2.49 | 90 | 111.11 | 0.930 | 0.13 | 0.32 |
| Prittioja et al. 2015 | harvested | 86.9 | 1.76 | 174 | 153.14 | 1.271 | 0.18 | 0.24 |
| Leroux et al. 2019 | field 2 | 90.0 | 1.97 | 180 | 177.14 | 1.671 | 0.23 | 0.23 |
| Aranguren et al. 2019 | CT | 68.0 | 2.26 | 160 | 154.01 | 1.339 | 0.32 | 0.49 |
| Gandorfer et al. 2011 | mean 1994-2006 | 68.9 | 2.16 | 180 | 148.48 | 1.174 | 0.17 | 0.19 |
| Argento et al. 2020 | F2 | 63.8 | 1.94 | 155 | 123.77 | 0.879 | 0.13 | 0.12 |
| Tedone et al. 2017 | Urea/Entec/S-N | 45.0 | 2.81 | 105 | 126.37 | 1.113 | 0.22 | 0.19 |
| Campos et al. 2018 | direct-seeding | 31.4 | 2.21 | 80 | 69.51 | 0.386 | 0.08 | 0.21 |
| Quebrago et al. 2015 | SSNM/VR | 35.0 | 2.40 | 230 | 84.04 | 0.333 | 0.07 | 0.13 |
| Marino et al. 2019 bis | Arabia | 62.1 | 1.63 | 70 | 101.03 | 0.871 | 0.15 | 0.15 |
| Skodt et al. 2003 | Plot A S2 | 101.7 | 1.92 | 176 | 195.65 | 2.061 | 0.29 | 0.36 |
| Vizzari et al. 2019 | Flat N | 67.4 | 1.26 | 120 | 84.72 | 0.468 | 0.08 | 0.25 |
| Bourdin et al. 2017 | Plot O | 82.1 | 2.00 | 150 | 164.40 | 1.576 | 0.22 | 0.16 |
| Casa et al. 2012 | 25% clay | 81.0 | 1.97 | 220 | 159.80 | 1.230 | 0.20 | 0.36 |
| Houlès et al. 2004 | Boigneville | 81.0 | 1.14 | 200 | 92.25 | 0.430 | 0.07 | 0.21 |
| Guerrero et al. 2021 | Field 2 | 80.4 | 1.58 | 138 | 127.31 | 0.986 | 0.11 | 0.13 |
| Argento et al. 2020 bis | ST | 62.3 | 2.14 | 116 | 133.54 | 1.183 | 0.18 | 0.15 |
| Basso et al.. 2016 | T1 | 30.0 | 3.38 | 63 | 101.34 | 0.924 | 0.20 | 0.22 |
| Morari et al. 2017 | N200 | 59.0 | 2.29 | 145 | 135.10 | 1.083 | 0.18 | 0.19 |
| Zillmann et al. 2006 | Lehmgrube | 81.0 | 1.80 | 184 | 145.67 | 1.117 | 0.19 | 0.21 |
| Stamatiadis et al. 2018 | ST | 58.2 | 2.20 | 212 | 127.86 | 0.802 | 0.17 | 0.14 |
| Samborski et al. 2016 | Variable N | 82.9 | 1.74 | 174 | 144.22 | 1.126 | 0.20 | 0.21 |
| Haberle et al. 2020 | Svacpravice | 81.2 | 2.48 | 201 | 201.13 | 2.037 | 0.27 | 0.22 |
| Haberle et al. 2020 | Kochanky | 61.4 | 2.65 | 163 | 162.89 | 1.485 | 0.20 | 0.19 |
| Kindred et al. 2014 | field B1 | 93.6 | 1.94 | 240 | 181.13 | 1.513 | 0.18 | 0.14 |
| Meyer-Aurich et al. 2010 | ML GHET | 75.0 | 1.60 | 170 | 119.92 | 0.788 | 0.10 | 0.33 |
| Zecha et al. 2018 | site-year 1 | 73.0 | 2.03 | 170 | 148.54 | 1.209 | 0.20 | 0.22 |
| Hlisnikovshy et al. 2016 | N4P2K2 | 83.3 | 1.50 | 75 | 125.15 | 1.292 | 0.18 | 0.21 |
| Dalla Marta et al. 2015 | average 3 sites | 50.4 | 2.87 | 128 | 144.56 | 1.319 | 0.24 | 0.27 |
| Perryman et al. 2018 (eRA) | s1 / strip_12 | 84.1 | 2.13 | 240 | 179.00 | 1.477 | 0.17 | 0.16 |
| etc. | etc. | etc. | etc. | etc. | etc. | etc. | etc. | |

As in EP3821688, the modelling approach used to obtain rRSQ_rdt, rRSQ_rdn & rRSQ_run consists of an automated machine - or model - learning algorithm, preferably of the boosting type, i.e. an automated learning technique for regression and classification problems which produces stepwise a prediction model in the form of an ensemble of weak predictors via an optimization of arbitrary differentiable loss functions to convert these weak learners into powerful ones iteratively.

The initial sustainable yield dataset can be obtained from existing in situ on-farm experiments in *integrated fertilizer management* (ifm), as in EP3821688, assaying innovative inputs such as biofertilizers, biostimulants, foliar applied fertilizers, etc. Model building will then involve the incremental addition of more site-specific, multi-treatment experimental and on-farm data from which the most sustainable treatments will then be selected as proposed herein and then included in the model for further reiteration using ever more experimental data. This progressive and incremental model building recreates numerically a form of collective, or *artificial,* intelligence since the excessively low or high, and thus unsustainable grain protein yields per unit of $N_{fertilizer}$ (RUN) tend to be excluded from the training dataset.

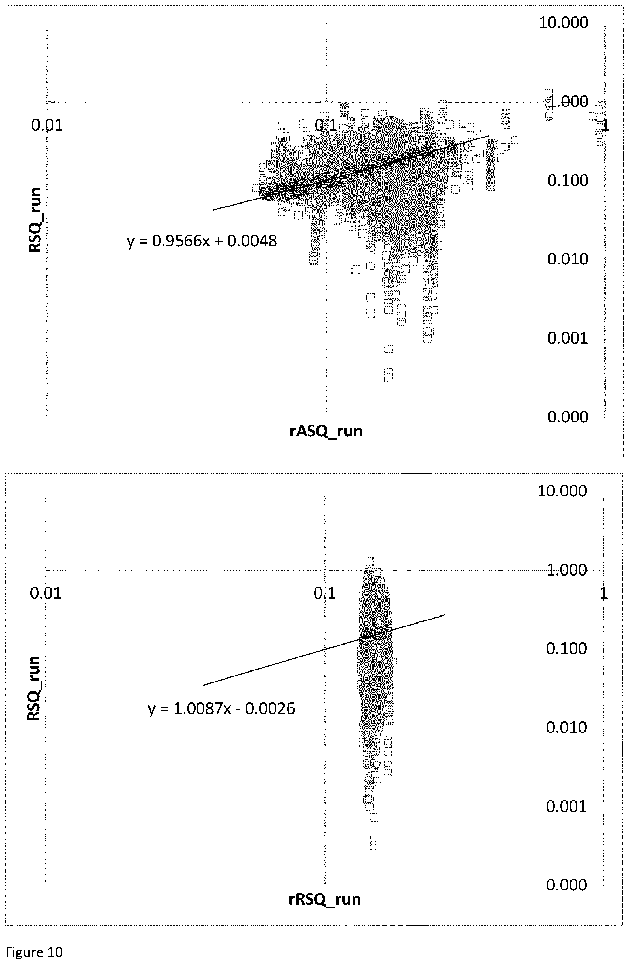

The AgroNum™/rRSQ model thus selects for the more sustainable treatment combinations making up a particular cropping practice for a given site-year because of its stricter narrow band of retained RSQ_run as a function of rRSQ_run (:: rRSQ) rather than rASQ (:: rASQ) otherwise **(Figure 10)**. The sustainability of these rRSQ-selected treatment combinations is ascertained by their superior agronomic (Table A) and soil conservation (Tables B & C) statistics.

**Figure 10** : Treatment combinations and cropping practices in terms of RSQ_run in relation to either conventional multiannual environmental means (:: rASQ) or reference agro-pedoclimatic benchmarks (:: rRSQ) as proposed herein.

As tentatively described in EP3821688, the AgroNum™ model is built through reiteration and gradual addition of multi-treatment experimental data as exemplified in Tables 1 & 2 and/or in situ on-farm cropping practice data and then selecting those treatment combinations with RSQ_run values closest to the rRSQ benchmark references. About 1000 of these 9000 or so observed treatments across Europe (**Figure 11**) are retained in either case. Indeed, the AgroNum™ has since been bonified and is now more precise and relevant than previously reported in EP3821688.

**Figure 11 :** Geographic representation of the 9000 or so treatment combinations across Europe (red circles / white numbers), the 1000 or so treatments selected strictly according to rASQ ( :: rASQ, red circles / black numbers) and the 1000 or so treatments according to the rRSQ benchmark AgroNum™ model ( :: rRSQ, green circles / black numbers). Though there is no clear geographic bias, the selected rRSQ benchmark data (:: rRSQ) is slightly more representative of the more arid south-western Europe; soil organic matter contents have been adjusted correspondingly in Table C.

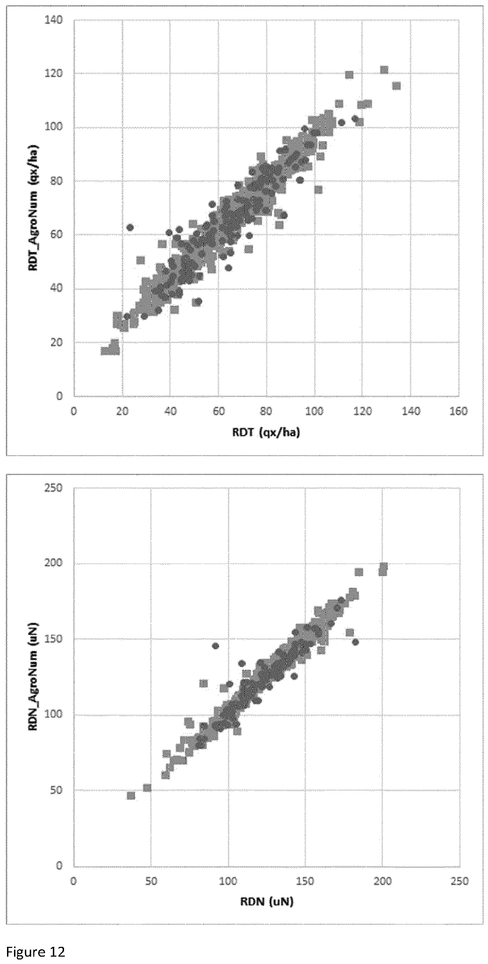

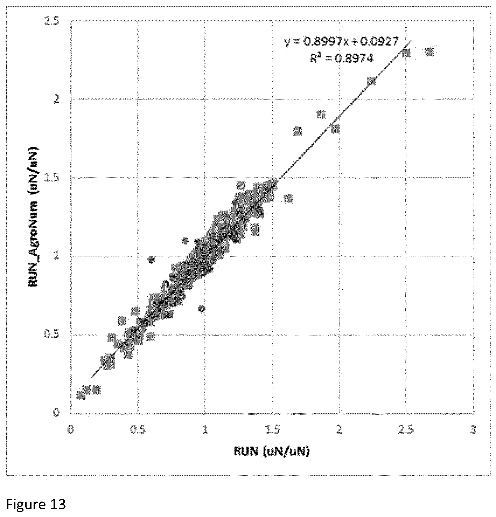

The $10^6$ rRSQ-selected data are then fed to various boosting algorithms to train the AgroNum™ model. As is, the predictive value of this model has been validated in terms of grain yield (RDT), grain-protein yield (RDN) and grain-protein yield per unit of N-fertilizer (**Figures 12 & 13**) as defined herein (RUN). The precision of these predicted values, especially and most importantly in terms of RDN and RUN, is sufficiently high for agricultural consultancy.

**Figure 12** : Validation of the AgroNum™ model in terms of grain yield (RDT) and grain protein yield (RDN) of various field crops including wheats, rapeseed and corn. The model was trained using 85% (filled squares) of the 1000 experimental treatments retained as proposed herein and their corresponding APC variables. Despite a few wayward points the RDT and RDN simulated rRSQ yields (15% of the aforesaid 1000; filled circles) are already sufficiently precise to be recommended as sustainable target yields.

**Figure 13** : Validation of the AgroNum™ model in terms of grain protein yield per unit of applied $N_{fertilizer}$ (RUN, alias $N_{fertilizer}$ use efficacy - $N_fUE$). This precise estimation reference RUN (filled circles) can now be used as a basis for the recalculation of more sustainable $N_{fertilizer}$ recommendations (TUN) corresponding to the aforementioned sustainable RDT, RDN & RUN, for instance according to the integrated fertilizer management (ifm) approach described in EP3821688, or more conventionally according to the N-balance method.

Recall that sustainability is thus to a large extent a function of RUN. However, it is well known that increasing TUN (N-fertilizer recommendations) will tend to reduce their unit yield ($N_{fertilizer}$ use efficiency; Dobermann et al. 2005). Here, this inherent decrease in N-fertilizer use efficiency, run, is referred to as $d_{run}$ empirically estimated as $a \times TUN^{-b}$, $a$ & $b$ set for the time being to 1500 and 1.50, respectively. TUN thus dictates $d_{run}$ given that RUN = $run^2/d_{run}$. RUN values at different TUN levels can thus be compared and the corresponding treatments and cropping practices impartially evaluated as to their sustainability.

Treatment & cropping practice selection according to rRSQ rather than rASQ is much more discrete and allows for the precise estimation of the more sustainable target yields as depicted in Figures 12 & 13. The RUN/iSQ values in both instances +/- 0.015 around the modelled values. See **Tables A, B & C** for a series of agronomic and soil conservation parameters depicting this greater sustainability of rRSQ-selected (:: rRSQ) treatment combinations and cropping practices.

Sustainable agriculture must conserve, or at least reduce the degradation of, soil organic matter by increasing RUN and thus decreasing the amount of post-harvest residual mineral-N (**Table A**). Lower C/N ratios of the post-harvest soil solution will reduce the priming of soil organic carbon mineralisation. The decline of soil organic matter contents will also be reduced if the oxygen requirements of the soil's microflora, i.e. the $O_2$ quotient (qO2 ; oxygen consumption per unit of microbial biomass), is lowered (**Table B**). Overtime, soil organic carbon contents will thus increase (**Table C**).

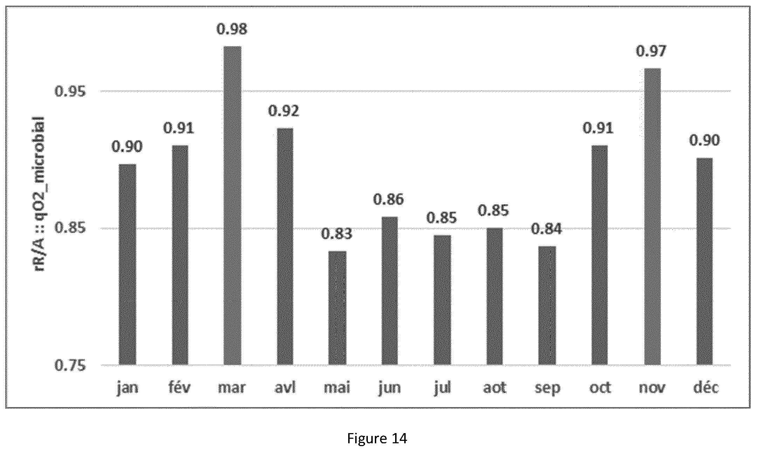

Interestingly, the qO2 temporal dynamic (**Table B**) of sustainable cropping as assessed herein is seasonal. Relative bursts being detectable in the spring and fall (**Figure 14**) when most beneficial for crop uptake via the release and fixation of mineral N, respectively.

**Figure 14** : Treatment combinations and cropping practices with yields closer to rRSQ than to rASQ also have on average lower qO2 values (Table B), cf. lower R/A ratios, *except* in early spring (March) and late fall (November) when soil microorganisms are either actively *releasing* immobilized mineral N or *fixing* atmospheric di-nitrogen *(alias non-symbiotic biological nitrogen fixation)*. The rest of the time, the microorganisms in soils under rRSQ-selected (:: rRSQ) treatments combinations are more latent and thus less likely to degrade soil organic carbon. This is synonymous with soil conservation and sustainable agriculture.

**Table A - Agronomic aspects of AgroNum™ :** Field crop grain (RDT), grain protein (RDN) and grain protein yield per unit of N_fertilizer (RUN) are on average superior on rRSQ than rASQ selected (::) plots (R/A ratios > 100%) . All differences and ratios are statistically significant at alpha = 1% (**). Recall that RUN and run differ in that RUN is the normalized unit yield as in run x run/d$_{run}$ (see text). Here, that the average :: rRSQ selected RUN value is approximately 1.00(09).

| Variable | :: rASQ | :: rRSQ | rRSQ-rASQ | R/A ratio |
|---|---|---|---|---|
| RDT (qx/ha) | 66.04 | 71.40 | 5.36 | 108%** |
| RDN (uN) | 125 | 137 | 12 | 110%** |
| RUN (uN/uN) | 0.921 | 1.009 | 0.089 | 110%** |
| run (uN/uN) | 0.753 | 0.855 | 0.101 | 113%** |
| TUN (uN) | 165 | 160 | 5 | 97%** |

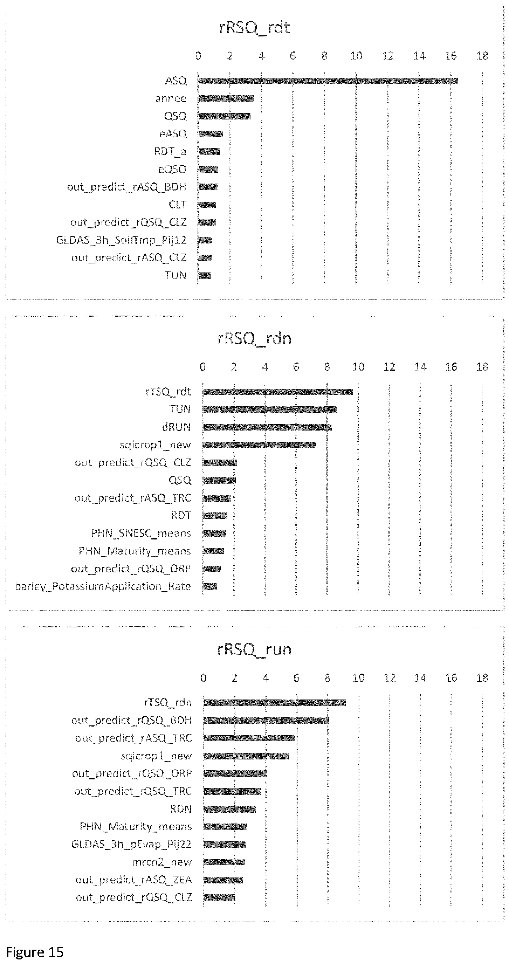

**Table B** - **Soil organic carbon conservation by AgroNum**™ *(cf.* Figure 15) : Increased soil carbon storage capacity sits well with lessened soil organic carbon decline, degradation rates and lower qO2 levels indicating higher carbon use efficacy by soil microorganisms. Lower qO2 levels are indicative of *healthy* soils in which microorganisms are less subjected to stresses associated higher oxygen consumption, soil degradation, erosion, acidification, etc.

| Variable | :: rASQ | :: rRSQ | ratio R/A | Reference |
|---|---|---|---|---|
| organic matter decline | 0.0348 | 0.0326 | 94%** | Orgiazzi et al. 2016 |
| dPOM Mg ha 84 | -1.46 | -1.19 | 82%** | Lugato et al. 2021 |
| qO2 annual mean gen | 0.002947 | 0.002634 | 89%** | Smith et al. 2021 |
| qO2 annual mean lc | 0.002383 | 0.002191 | 92%** | Smith et al. 2021 |

**Table C - Soil carbon storage aspects of AgroNum™ :** Soil carbon levels circa 2010, initially lower given a slight south-western (semi-arid) bias of :: rRSQ-selected plots (Figure 11; 47.84/49.08** latitude and 11.89/13.05** longitude) are ultimately higher by 2050. This denotes an increased carbon storage by field-plots complying with AgroNum™ sustainable target yields. The rRSQ-selected 2050 soil organic-C levels are divided by the average R/A ratio ≈ 93%.

| CO_2010 | :: rASQ | :: rRSQ | R/A ratio | Reference |
|---|---|---|---|---|
| r%CO_0515 | 2.18 | 2.07 | 95% | Batjet et al. 2020 |
| %T_OC | 1.38 | 1.32 | 96% | Lugato et al. 2014_a,b |
| %SOC | 0.569 | 0.498 | 88% | Lugato et al. 2014_a,b |
| POM_gkg | 6.76 | 6.36 | 94% | Lugato et al. 2021 |
| MAOM_gkg | 18.87 | 17.5 | 93% | Lugato et al. 2021 |
| OCS_tha | 78.76 | 74.28 | 94% | Batjes et al. 2020 |
| Co (g/g) 2050 | 0.037 | .038 | 101%[ns] | Lugato et al. 2015 |
| Co_2050::2010 | 0.0376 | 0.0409 | 109%** | Lugato et al. 2015 |

Finally, boosting algorithms such as gbm (R®) and catboost (Yandex®) being AI-like, the greater influence of some APC variables is not necessarily explicative. Though more strongly predictive than general linear models (glm), such algorithms need to interpreted carefully. This said, predicted rRSQ_rdt values (**Figure 15**) are appreciably influenced by ASQ (regional yield potential) and year (*année,* fr), rRSQ_rdn values y rRSQ_rdt and current TUN, and finally rRSQ_run values by rRSQ_rdn and the estimated durum wheat (BDH) and triticale (TRC) yield potentials as well as the previous estimated RDN (grain-protein yield). This is all very common sense and augurs well for European agriculture.

**Figure 15** : Relative influence of the top 12 of 1000 variables determining the agro-pedoclimatic references (rRSQ) in terms of yield (rRSQ_rdt), protein yield (rRSQ_rdn) and protein yield per unit of $N_{fertilizer}$ (rRSQ_run, alias $N_fUE$). Note that the decline in APC variable influence is more gradual for rRSQ_run and thus more comprehensive in terms of sustainability assessment.

## Acronyms and definitions

**Precision agriculture**: farm management concept based on observing, measuring and responding to inter and intra-field variability in crops so as to define a decision support system (DSS) for whole farm management optimizing returns on inputs while preserving resources. (Wikipedia)

**Multi-criteria decision analyses** : sub-discipline of operations research that explicitly evaluates multiple conflicting criteria in decision making (Wikipedia)

**Sustainability and sustainable agriculture**: application to agriculture of the principles of sustainable development that meets present requirements, without compromising the ability of future generations to meet their own needs; sustainable agriculture is thus inherently a socio-economic and environmental compromise (FAO/Bruntland 1987).

**eRSQ, eQSQ and eASQ:** the relative effect of RSQ, QSQ and ASQ, respectively, on treatment effect (eTRT; Equations 1, 2 and 3). These values are additive when commensurable (EP3821688) and together indicate treatment effect (TRT) or as proposed herein the sustainability of current cropping practices (eQSQ) as a function of the treatment, if any (eTSQ), and the current meteorology's effect on yield potential in that region (eASQ).

**Integrated fertilizer management**: a component of sustainable agriculture where crop receives fertilization recommendations precisely adapted to its needs as a function of agro-pedoclimate (APC) variables so as to lessen post-harvest residual mineral nitrogen by increasing fertilizer use efficiency.

**gbm** (gradient boosted models) as opposed to glm (general linear models): machine learning technique used in regression and classification tasks that gives a prediction model in the form of an ensemble of weak prediction models such as decision trees built in a stage-wise fashion as in other boosting methods, but it generalizes the other methods by allowing optimization of an arbitrary differentiable loss function. (Wikipedia)

**Intensity/*Extensivity:*** Quantitative criteria of crop yield in terms of grain (RDT), grain-protein (RDN) and grain-protein per unit of nitrogen fertilizer (RUN) in reference to either regional, local and/or multiannual yield averages, or more interestingly here plot specific rRSQs. Higher yields are said to be intensive rather than extensive.

**iSQ:** rasterized crop and biomass productivity indices as a function of a number of APC variables including climate, net primary productivity and basic soil classification and carry capacity. For example and used herein, sqicrop1 or *crop productivity index* (Tóth et al. 2013) integrating the crop production potential of above-ground biomass over time regardless of the fertilization rate and cultivation practices.

**Benchmarking**: used to measure performance using a specific indicator (cost per unit of measure, productivity or yield per unit of measure, etc.) resulting in a metric of performance that is then comparable to others (Wikipedia), and more specifically here sustainable.

**Cropping practice**: set or ensemble of inputs, soil cultivation and crop scheduling selected from an array of options, or toolkit, for any given cropping season when attempting to attain a preestablished target yield. Cropping practice composition will thus vary from year to year as a function of meteorology and actualized yield potential but will remain analogous from year to year if the aforesaid toolkit is unchanged. The addition or replacement of one or more effective input will alter the current cropping practice and its target yield.

**RCS:** soil borne crop residues, usually cellulosic, left on the ground after harvesting the field crop.

**Treatment yield (T)**: as in EP3821688 is the grain or grain-protein yield as affected by the modification of the cropping practices. Most often, T is simply estimated as the harvested yield and is thus confounded by target yield (Q) which may differ from year to year and the regional average annual yield (A) which will also vary as a function meteorology. **T** is thus a "gross" treatment effect that needs to be adjusted by subtracting the effects of Q and A as proposed herein in Equation 1 to obtain **eTRT**.

**Target yield (Q):** as in EP3821688 (equations 1 & 2) a given grain or grain-protein yield (Q) set for a particular plot and cropping practice indicative of the level of technical knowhow and intensity or extensivity of the said cropping practice as defined herein. For a given crop, Q is often set as the average of the preceding five (5) harvests, or for lack of better the five-year moving average of the administrative, regional or local mapping unit.

**Average (annual) yield (A):** as in EP3821688 (equations 1 & 2) is the average annual grain yield across the most relevant administrative mapping unit within which is located the field-plot on any given year. A is largely affected by meteorology and is often used as an a priori crude approximation of yield potential for plots in that administrative unit.

**RDT, RDN and RUN:** respectively, grain yield (quintal (qx) or kg/ha), grain protein yield (kg grain protein or N_protein/ha) and grain protein yield per unit N_fertilizer, or **TUN** (kg N_protein/unit of nitrogen fertilizer (TUN) given that one unit of N_fertilizer (uN) is 1kg-N/ha/year). Note that RUN = $run^2/d_{run}$ given that run is the gross unit yield divided by drun = [a · TUN-b] and that the unique a and b coefficients are empirical describing the decay of run with increasing TUN (Dobermann et al. 2005), herein and for the time being advantageously set to 1500 and 1.50, respectively.

**rRSQ, rQSQ & rASQ:** agro-pedoclimatic (APC) references for a particular plot obtained by meta-modeling of pedoclimatic data. These references - as opposed to mere checks or untreated controls are used as denominators of aforesaid RSQ, QSQ and ASQ, respectively, in terms of RDT, RDN & RUN. They are obtained via some form of *artificial intelligence* (AI) like algorithms such as gbm, catboost, etc., and represent a sort of sustainability benchmark against which treatment (RSQ), target (QSQ) and meteorological (ASQ) effects on yield can be assayed to determine the efficacy and sustainability of current cropping practices for a given field-plot.

**RSQ, QSQ & ASQ:** Proxy values of treatment or cropping practice, target and annual yields at the plot, local and regional levels, respectively, as proposed in EP3821688 when adjusted for some sort of soil productivity index, **iSQ** for instance. RSQ, QSQ and ASQ can then be further divided by rRSQ, rQSQ and rASQ, respectively.

**References and bibliography**

Aranguren et al. 2019. Crop Sensor-Based In-Season Nitrogen Management of Wheat with Manure Application. Remote Sens. 2019, 11, 1094; doi:10.3390/rs11091094

Argento et al. 2020/bis. Site-specific nitrogen management in winter wheat supported by low-altitude remote sensing and soil data. Precision Agriculture https://doi.org/10.1007/s11119-020-09733-3

Basso et al. 2011. A strategic and tactical management approach to select optimal N fertilizer rates for wheat in a spatially variable field. Europ. J. Agronomy 35 (2011) 215- 222

Basso et al. 2016. Variable rate nitrogen fertilizer response in wheat using remote sensing. Precision Agric (2016) 17:168-182 DOI 10.1007/s11119-015-9414-9

Batjes et al. 2020. Standardised soil profile data to support global mapping and modelling (WoSIS snapshot 2019). Earth Syst. Sci. Data, 12, 299-320,

Bourdin et al. 2017. A tool based on remotely sensed LAI, yield maps and a crop model to recommend variable rate nitrogen fertilization for wheat. Advances in Animal Biosciences: Precision Agriculture (ECPA) 2017, (2017), 8:2, pp 672-677

Brundtland, G. 1987. Report of the World Commission on Environment and Development: Our Common Future. United Nations General Assembly document A/42/427.

Campos et al. 2018. Mapping within-field variability in wheat yield and biomass using remote sensing vegetation indices. Precision Agriculture https://doi.org/10.1007/s11119-018-9596-z

Casa et al. 2012. Forcing a wheat crop model with LAI data to access agronomic variables: Evaluation of the impact of model and LAI uncertainties and comparison with an empirical approach. Europ. J. Agronomy 37: 1- 10

Castaldi et al. 2015. Influence of acquisition time and resolution on wheat yield estimation at the field scale from canopy biophysical variables retrieved from SPOT satellite data, International Journal of Remote Sensing, 36:9, 2438-2459, DOI: 10.1080/01431161.2015.1041174

Corentin et al. 2018. A zone-based approach for processing and interpreting variability in multi-1 temporal yield data sets. Computers and Electronics in Agriculture · March 2018 DOI: 10.1016/j.compag.2018.03.029

Dalla Marta et al. 2015. Durum wheat in-field monitoring and early-yield prediction: assessment of potential use of high-resolution satellite imagery in a hilly area of Tuscany, Central Italy. Journal of Agricultural Science (2015), 153, 68-77. Cambridge University Press 2013 doi:10.1017/S0021859613000877 / doi: 10.3354/cr01322

Dobermann et al. 2005. Nitrogen use efficacy - state of the art. IFA International Workshop / Enhanced-Efficacy Fertilizers / Frankfurt, Germany, 28-30 June 2005 / https://digitalcommons.unl.edu/agronomyfacpub/316/

Gandorfer et al. 2011. Analyzing the Effects of Risk and Uncertainty on Optimal Tillage and Nitrogen Fertilizer Intensity for field crops in Germany, Agricultural Systems 104(8), 615-622.

Guerrero et al. 2021 Data fusion approach for map-based variable-rate nitrogen fertilization in barley and wheat. Soil & Tillage Research 205 (2021) 104789

Guyomard et al. 2017. Agricultural practices under the microscope: towards multi-performing agriculture. Eds. Quae 78026 Versailles (France)

Haberle et al. 2020. The 13C Discrimination of Crops Identifies Soil Spatial Variability Related to Water Shortage Vulnerability. Agronomy 2020, 10, 1691; doi:10.3390/agronomy10111691

Houlès et al. 2004. Evaluation of the ability of the crop model STICS to recommend nitrogen fertilisation rates according to agro-environmental criteria. Agronomy 24 (2004) 339-349

Hank et al. 2015. Using a Remote Sensing-Supported Hydro-Agroecological Model for Field-Scale Simulation of Heterogeneous Crop Growth and Yield: Application for Wheat in Central Europe. Remote Sense. 2015, 7, 3934-3965; doi:10.3390/rs70403934

Hlisnikovský et al. 2016. Winter wheat: results of long-term fertilizer experimentin Prague-Ruzyně over the last 60 years. Plant Soil Approx. Vol. 62, 2016, No. 3: 105-113 doi: 10.17221/746/2015-PSE

Kaivosoja et al. 2013. A case study of a precision fertilizer application task generation for wheat based on classified hyperspectral data from UAV combined with farm history data

Kindred et al. 2014. Exploring the spatial variation in the fertilizer-nitrogen requirement of wheat within fields. Journal of Agricultural Science, Page 1 of 17 / doi:10.1017/S0021859613000919

Lairez et al. 2016. Agriculture and sustainable development; guide for multi-criteria evaluation. Eds. Quae, 78026 Versailles Cedex (France).

Leroux et al. 2019. Production gap analysis: an operational approach to yield gap analysis using historical high-resolution yield data sets. 12th European Conference on Precision Agriculture, ECPA 2019, Jul 2019, Montpellier, France. pp.75-81, 10.3920/978-90-8686-888-9_8 / hal-02609781

Lugato et al. 2014. A new baseline of organic carbon stock in European agricultural soils using a modelling approach. Global Change Biology (2014) 20, 313-326, doi: 10.1111/gcb.12292

Lugato et al. 2015. Potential carbon sequestration of European arable soils estimated by modelling a comprehensive set of management practices. Global Change Biology (2015) 20, 3557-3567, doi: 10.1111/gcb.12551

Lugato et al. 2016. Quantifying the erosion effect on current carbon budget of European agricultural soils at high spatial resolution. Global Change Biology (2016) 22, 1976-1984, doi: 10.1111/gcb.13198

Emanuele Lugato et al 2020. Maximising climate mitigation potential by carbon and radiative agricultural land management with cover crops.Environ. Res. Lett. 15 094075

Lugato et al. 2021. Different climate sensitivity of particulate and mineral-associated soil organic matter. Nature Geoscience / https://doi.org/10.1038/s41561-021-00744-x

Marino et al. 2020. Agronomic Traits Analysis of Ten Winter Wheat Cultivars Clustered by UAV-Derived Vegetation Indices. Remote Sense. 2020, 12, 249; doi:10.3390/rs12020249

Meyer-Aurich et al. 2010. Spatial econometric analysis of a field-scale site-specific nitrogen fertilizer experiment on wheat (Triticum aestuvum L.) yield and quality. Comput. Electron. Agric. 74: 73-79

Milne et al. 2006a. Estimating a boundary line model for a biological response by maximum likelihood. Ann Appl Biol 149: 223-234

Milne et al. 2006b. On testing biological data for the presence of a boundary. Ann Appl Biol 149: 213.

Morari et al. 2017. Optimising durum wheat cultivation in North Italy: understanding the effects of site-specific fertilization on yield and protein content. Precision Agric DOI 10.1007/s11119-017-9515-8

Mulvaney et al. 2009. Synthetic Nitrogen Fertilizers Deplete Soil Nitrogen: A Global Dilemma for Sustainable Cereal Production. J. Approximately. Qual. 38:2295-2314 (2009) / doi:10.2134/jeq2008.0527

Orgiazzi et al. 2016. A knowledge-based approach to estimating the magnitude and spatial patterns of potential threats to soil biodiversity. Science of the Total Environment 545-546 (2016) 11-20

Perryman, S. A.M. et al. The electronic Rothamsted Archive (e-RA), an online resource for data from Rothamsted's long-term experiments. Sci Data 5:180072 doi: 10.1038/sdata.2018.72 (2018).

Pirttioja et al. 2015. Temperature and precipitation effects on wheat yield across a European transect: a crop model ensemble analysis using impact response surfaces. Clim. Res. Vol. 65: 87-105, 2015

Quebrajo et al. 2015. An Approach to Precise Nitrogen Management Using Hand-Held Crop Sensor Measurements and Winter Wheat Yield Mapping in a Mediterranean Environment. Sensors 15, 5504-5517; doi:10.3390/s150305504

Salo et al. 2016. Comparing the performance of 11 crop simulation models in predicting yield response to nitrogen fertilization. Journal of Agricultural Science 154 (7):1218-1240. 10.1017/s0021859615001124 / hal-01413572

Samborski et al. 2016. On-farm evaluation of an active optical sensor performance forvariable nitrogen application in winter wheat. Europ. J. Agronomy 74 (2016) 56-67

Schils et al. 2018. Cereal yield gaps across Europe. Eur. J. Agron. 101:109-120

Sharpley, A.N., and J.R. Williams, eds. 1990. EPIC. Erosion/Productivity Impact Calculator: 1. Model Documentation. U.S. Department of Agriculture Technical Bulletin No. 1768. 235 pp.

Skjødt et al. 2003. Sensor Based Nitrogen Fertilization Increasing Grain Protein Yield in Winter Wheat. Risø-R-1389 Risø National Laboratory, Roskilde, Denmark Marts 2003

Smith et al. 2021. Large-scale drivers of relationships between soil microbial properties and organic carbon across Europe. Global Ecol Biogeogr. 30:2070-2083.

Stamatiadis et al. 2020. Variable-rate nitrogen fertilization of winter wheat under high spatial resolution. Precision Agriculture volume 21, pages695-712(2020)

Tedone, L., et al. 2017. Nitrogen management strategy for optimizing agronomic and environmental performance of rainfed durum wheat under Mediterranean climate, Journal of Cleaner Production (2017), https://doi.org/10.1016/j.jclepro.2017.11.215

Toscano et al. 2019. A Precision Agriculture Approach for Durum Wheat Yield Assessment Using Remote Sensing Data and Yield Mapping. Agronomy 2019, 9, 437; doi:10.3390/agronomy9080437

Tóth et al. 2013. Continental-scale assessment of provisioning soil functions in Europe. Ecological Processes 2:32.

Vizzari et al. 2019. Sentinel 2-Based Nitrogen VRT Fertilization in Wheat: Comparison between Traditional and Simple Precision Practices. Agronomy 2019, 9, 278; doi:10.3390/agronomy9060278

Zecha et al. 2018. Utilisation of Ground and Airborne Optical Sensors for Nitrogen Level Identification and Yield Prediction in Wheat. Agriculture 2018, 8, 79; doi:10.3390/agriculture8060079

Zillmann et al. 2006. Assessment of Cereal Nitrogen Requirements Derived by Optical On-the-Go Sensors on Heterogeneous Soils. Agron. J. 98:682-690 (2006).

**Claims**

1. **Agronomic method for evaluating, benchmarking and improving the sustainability of current cropping practices** at the field-plot level comprised of the following steps;

   • the determination of an *agro-pedoclimatic yield reference,* rRSQ, for the field plot,
   • the determination of RSQ defined as the yield with the current cropping practice divided by some iSQ index of the inherent productivity of the field plot,
   • the comparison of RSQ and rRSQ as in eRSQ = RSQ/rRSQ,

   given that overall net treatment effect of the cropping practice eTRT = [eRSQ - eQSQ - eASQ] when eASQ = ASQ/rASQ and eQSQ = QSQ/rQSQ thus integrating into eTRT non only current cropping practice yield level (R) but also target yield level (Q) and the current average local or regional yield (A) as affected by meteorology, knowing that QSQ is the said target yield divided by iSQ and ASQ the local or regional yield potential affected by the current annual meteorology divided by some local or regionalized value of iSQ, rQSQ and rASQ being for their part agro-pedoclimatic (APC) references applicable to QSQ & ASQ,
   **characterized in that**;

   • **eTRT is set to zero as in eTRT ≡ 0, and therefore eRSQ = [eQSQ + eASQ]** and further **characterized in that**;
   • cropping practices are deemed sustainable when RSQ = rRSQ such that,
   • if and when RSQ - rRSQ is a *positive* value, the current cropping practice is deemed *too intensive* (high) and target yields must be reduced to maintain sustainability,
   • if and when RSQ - rRSQ is a *negative* value, the current cropping practice is deemed too *extensive* (low) and target yields can be increased while maintaining sustainability,
   • the current cropping practice's sustainability is assayed by the vertical distance separating the observed RSQ and its corresponding rRSQ reference on an [y:x] graph given that sustainability is optimal if and when RSQ = rRSQ as depicted by a straight 1:1 [y:x] graph,

   thus allowing for a calibrated modification of the current cropping practice, target yields and ensuing N-fertilizer recommendations when RSQ and rRSQ are *not* sufficiently similar, the efficacy of such modifications of current unsustainable cropping practices being thus and then reassessed using in situ agronomic experimentation protocols applicable to *integrated fertilizer management* (ifm).

2. **Agronomic method for evaluating, benchmarking and improving the sustainability of current cropping practices** according to Claim 1 **characterized in that** RSQ and rRSQ are deemed sufficiently similar when the difference between RSQ and rRSQ expressed in terms of RUN, as in RSQ_run & rRSQ_run, is +/- 5 to 15%, more specifically +/- 8 to 12% and advantageously approximately +/- 10% that of rRSQ.

3. **Agronomic method for evaluating, benchmarking and improving the sustainability of current cropping practices** according to any of the preceding claims **characterized in that** RSQ and rRSQ are expressed in terms of RUN ($uN_{grain}$/ $uN_{fertilizer}$) i.e. grain protein yield per unit (uN) of N_fertilizer (TUN; kg-$N_{fertilizer}$/hectare) calculated as the ratio $run^2$/ $d_{run}$ given that run is the *gross* unit yield divided by $d_{run} = [a \cdot TUN^{-b}]$ and that *a* and *b* are unique empirical coefficients applicable to all plots describing the gradual decrease of run with increasing TUN.

Figure 1

Figure 2

Figure 3

Figure 6

Figure 5

Figure 4

Figure 9

Figure 8

Figure 7

Figure 10

Figure 11

Figure 12

Figure 13

Figure 14

## rRSQ_rdt

ASQ
annee
QSQ
eASQ
RDT_a
eQSQ
out_predict_rASQ_BDH
CLT
out_predict_rQSQ_CLZ
GLDAS_3h_SoilTmp_Pij12
out_predict_rASQ_CLZ
TUN

## rRSQ_rdn

rTSQ_rdt
TUN
dRUN
sqicrop1_new
out_predict_rQSQ_CLZ
QSQ
out_predict_rASQ_TRC
RDT
PHN_SNESC_means
PHN_Maturity_means
out_predict_rQSQ_ORP
barley_PotassiumApplication_Rate

## rRSQ_run

rTSQ_rdn
out_predict_rQSQ_BDH
out_predict_rASQ_TRC
sqicrop1_new
out_predict_rQSQ_ORP
out_predict_rQSQ_TRC
RDN
PHN_Maturity_means
GLDAS_3h_pEvap_Pij22
mrcn2_new
out_predict_rASQ_ZEA
out_predict_rQSQ_CLZ

Figure 15

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 22 15 2629

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/077574 A1 (BULL JASON [US] ET AL) 12 March 2020 (2020-03-12) * abstract * * page 2, paragraph 61 * * page 3, paragraph 68 * * page 12, paragraph 135 * * page 19, paragraphs 216,218 * * claims; figures * | 1-3 | INV. A01C21/00 G06Q50/02 |
| A | WO 2013/168483 A1 (KUBOTA KK [JP]) 14 November 2013 (2013-11-14) * abstract * * page 6, paragraphs 20,21,22 * * page 7, paragraph 22 * * page 9, paragraph 31 * * page 10, paragraph 34 * * page 11, paragraph 40 * * page 13, paragraphs 48,49 * * page 14, paragraph 53 * * claims; figures * | 1-3 | |
| A | EP 3 335 536 A1 (POLYOR SARL [FR]) 20 June 2018 (2018-06-20) * abstract * * claims; figures * | 1-3 | TECHNICAL FIELDS SEARCHED (IPC) A01C G06Q |

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| The Hague | 2 November 2022 | Oltra García, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04E07)

Europäisches
Patentamt

European
Patent Office

Office européen
des brevets

**INCOMPLETE SEARCH
SHEET C**

```
Claim(s) searched incompletely:
        1-3

Reason for the limitation of the search (non-patentable invention(s)):

1.       In reply to the invitation to indicate the subject-matter to be
searched pursuant Rule 63(1) EPC the applicant presented arguments to
support the technical character of the invention of claims 1-3.

2.       The arguments of the applicant cannot be followed and,
therefore, it is still considered that all claims are directed to non
patentable subject-matter, in particular to schemes, rules and methods
for doing business, according to Article 52 (2)(c) EPC. The reasons
therefor are explained in the annexed European Search Opinion.

3.       However, and in order to provide a fair chance to the applicant
to continue the procedure a search report has been established under the
assumption that the claims can be interpreted as argued by the applicant.
It is however to be noted that the wording of the claims must be amended
in order to allow for this interpretation, as it will be argued in the
next point.
For the purposes of he search the claims have been interpreted as
including an explicit step for harvesting the fields using the
appropriate machinery and the corresponding technical means for measuring
the yield, as well as a final step of using the results of the method for
performing the recommended crop practice, hence providing the claims as a
whole with a technical character.
```

## ANNEX TO THE EUROPEAN SEARCH REPORT
## ON EUROPEAN PATENT APPLICATION NO.

EP 22 15 2629

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2022

| Patent document cited in search report | | Publication date | Patent family member(s) | | Publication date |
|---|---|---|---|---|---|
| US 2020077574 | A1 | 12-03-2020 | AR | 116313 A1 | 21-04-2021 |
| | | | AU | 2019340665 A1 | 29-04-2021 |
| | | | AU | 2022203988 A1 | 30-06-2022 |
| | | | BR | 112021004345 A2 | 25-05-2021 |
| | | | CA | 3112581 A1 | 19-03-2020 |
| | | | CN | 113168598 A | 23-07-2021 |
| | | | EP | 3850460 A1 | 21-07-2021 |
| | | | US | 2020077574 A1 | 12-03-2020 |
| | | | WO | 2020055950 A1 | 19-03-2020 |
| WO 2013168483 | A1 | 14-11-2013 | CN | 103562949 A | 05-02-2014 |
| | | | JP | 6025390 B2 | 16-11-2016 |
| | | | JP | 2013233117 A | 21-11-2013 |
| | | | KR | 20140005372 A | 14-01-2014 |
| | | | KR | 20170018977 A | 20-02-2017 |
| | | | WO | 2013168483 A1 | 14-11-2013 |
| EP 3335536 | A1 | 20-06-2018 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3821688 A

**Non-patent literature cited in the description**

- **ARANGUREN et al.** Crop Sensor-Based In-Season Nitrogen Management of Wheat with Manure Application. *Remote Sens,* 2019, vol. 11, 1094
- **ARGENTO et al.** Site-specific nitrogen management in winter wheat supported by low-altitude remote sensing and soil data. *Precision Agriculture,* 2020, https://doi.org/10.1007/s11119-020-09733-3
- **BASSO et al.** A strategic and tactical management approach to select optimal N fertilizer rates for wheat in a spatially variable field. *Europ. J. Agronomy,* 2011, vol. 35, 215-222
- **BASSO et al.** Variable rate nitrogen fertilizer response in wheat using remote sensing. *Precision Agric,* 2016, vol. 17, 168-182
- **BATJES et al.** Standardised soil profile data to support global mapping and modelling (WoSIS snapshot 2019). *Earth Syst. Sci. Data,* 2020, vol. 12, 299-320
- **BOURDIN et al.** A tool based on remotely sensed LAI, yield maps and a crop model to recommend variable rate nitrogen fertilization for wheat. *Advances in Animal Biosciences: Precision Agriculture (ECPA) 2017,* 2017, vol. 8 (2), 672-677
- **BRUNDTLAND, G.** Report of the World Commission on Environment and Development: Our Common Future. *United Nations General Assembly document A/42/427,* 1987
- **CAMPOS et al.** Mapping within-field variability in wheat yield and biomass using remote sensing vegetation indices. *Precision Agriculture,* 2018, https://doi.org/10.1007/s11119-018-9596-z
- **CASA et al.** Forcing a wheat crop model with LAI data to access agronomic variables: Evaluation of the impact of model and LAI uncertainties and comparison with an empirical approach. *Europ. J. Agronomy,* 2012, vol. 37, 1-10
- **CASTALDI et al.** Influence of acquisition time and resolution on wheat yield estimation at the field scale from canopy biophysical variables retrieved from SPOT satellite data. *International Journal of Remote Sensing,* 2015, vol. 36 (9), 2438-2459

- **CORENTIN et al.** A zone-based approach for processing and interpreting variability in multi-1 temporal yield data sets. *Computers and Electronics in Agriculture,* March 2018
- Durum wheat in-field monitoring and early-yield prediction: assessment of potential use of high-resolution satellite imagery in a hilly area of Tuscany, Central Italy. **DALLA MARTA et al.** Journal of Agricultural Science. Cambridge University Press, 2013, vol. 153, 68-77
- **DOBERMANN et al.** Nitrogen use efficacy - state of the art. *IFA International Workshop / Enhanced-Efficacy Fertilizers / Frankfurt, Germany,* 2005, https://digitalcommons.unl.edu/agronomyfacpub/316
- **GANDORFER et al.** Analyzing the Effects of Risk and Uncertainty on Optimal Tillage and Nitrogen Fertilizer Intensity for field crops in Germany. *Agricultural Systems,* 2011, vol. 104 (8), 615-622
- **GUERRERO et al.** Data fusion approach for map-based variable-rate nitrogen fertilization in barley and wheat. *Soil & Tillage Research,* 2021, vol. 205, 104789
- **GUYOMARD et al.** Agricultural practices under the microscope: towards multi-performing agriculture. 2017
- **HABERLE et al.** The 13C Discrimination of Crops Identifies Soil Spatial Variability Related to Water Shortage Vulnerability. *Agronomy,* 2020, vol. 10, 1691
- **HOULÈS et al.** Evaluation of the ability of the crop model STICS to recommend nitrogen fertilisation rates according to agro-environmental criteria. *Agronomy,* 2004, vol. 24, 339-349
- **HANK et al.** Using a Remote Sensing-Supported Hydro-Agroecological Model for Field-Scale Simulation of Heterogeneous Crop Growth and Yield: Application for Wheat in Central Europe. *Remote Sense,* 2015, vol. 7, 3934-3965

- **KAIVOSOJA et al.** *A case study of a precision fertilizer application task generation for wheat based on classified hyperspectral data from UAV combined with farm history data,* 2013
- **KINDRED et al.** Exploring the spatial variation in the fertilizer-nitrogen requirement of wheat within fields. *Journal of Agricultural Science,* 2014, 1-17
- **LAIREZ et al.** Agriculture and sustainable development; guide for multi-criteria evaluation. 2016
- **LEROUX et al.** Production gap analysis: an operational approach to yield gap analysis using historical high-resolution yield data sets. *12th European Conference on Precision Agriculture, ECPA 2019,* July 2019, 75-81
- **LUGATO et al.** A new baseline of organic carbon stock in European agricultural soils using a modelling approach. *Global Change Biology,* 2014, vol. 20, 313-326
- **LUGATO et al.** Potential carbon sequestration of European arable soils estimated by modelling a comprehensive set of management practices. *Global Change Biology,* 2015, vol. 20, 3557-3567
- **LUGATO et al.** Quantifying the erosion effect on current carbon budget of European agricultural soils at high spatial resolution. *Global Change Biology,* 2016, vol. 22, 1976-1984
- **EMANUELE LUGATO et al.** Maximising climate mitigation potential by carbon and radiative agricultural land management with cover crops. *Environ. Res. Lett.,* 2020, vol. 15, 094075
- **LUGATO et al.** Different climate sensitivity of particulate and mineral-associated soil organic matter. *Nature Geoscience,* 2021, https://doi.org/10.1038/s41561-021-00744-x
- **MARINO et al.** Agronomic Traits Analysis of Ten Winter Wheat Cultivars Clustered by UAV-Derived Vegetation Indices. *Remote Sense,* 2020, vol. 12, 249
- **MEYER-AURICH et al.** Spatial econometric analysis of a field-scale site-specific nitrogen fertilizer experiment on wheat (Triticum aestuvum L.) yield and quality. *Comput. Electron. Agric.,* 2010, vol. 74, 73-79
- **MILNE et al.** Estimating a boundary line model for a biological response by maximum likelihood. *Ann Appl Biol,* 2006, vol. 149, 223-234
- **MILNE et al.** On testing biological data for the presence of a boundary. *Ann Appl Biol,* 2006, vol. 149, 213
- **MORARI et al.** Optimising durum wheat cultivation in North Italy: understanding the effects of site-specific fertilization on yield and protein content. *Precision Agric,* 2017
- **MULVANEY et al.** Synthetic Nitrogen Fertilizers Deplete Soil Nitrogen: A Global Dilemma for Sustainable Cereal Production. *J. Approximately. Qual.,* 2009, vol. 38, 2295-2314
- **ORGIAZZI et al.** A knowledge-based approach to estimating the magnitude and spatial patterns of potential threats to soil biodiversity. *Science of the Total Environment,* 2016, vol. 11-20, 545-546
- **PERRYMAN, S. A.M. et al.** The electronic Rothamsted Archive (e-RA), an online resource for data from Rothamsted's long-term experiments. *Sci Data,* 2018, vol. 5, 180072
- **PIRTTIOJA et al.** Temperature and precipitation effects on wheat yield across a European transect: a crop model ensemble analysis using impact response surfaces. *Clim. Res.,* 2015, vol. 65, 87-105
- **QUEBRAJO et al.** An Approach to Precise Nitrogen Management Using Hand-Held Crop Sensor Measurements and Winter Wheat Yield Mapping in a Mediterranean Environment. *Sensors,* 2015, vol. 15, 5504-5517
- **SALO et al.** Comparing the performance of 11 crop simulation models in predicting yield response to nitrogen fertilization. *Journal of Agricultural Science,* 2016, vol. 154 (7), 1218-1240
- **SAMBORSKI et al.** On-farm evaluation of an active optical sensor performance forvariable nitrogen application in winter wheat. *Europ. J. Agronomy,* 2016, vol. 74, 56-67
- **SCHILS et al.** Cereal yield gaps across Europe. *Eur. J. Agron.,* 2018, vol. 101, 109-120
- EPIC. Erosion/Productivity Impact Calculator: 1. Model Documentation. U.S. Department of Agriculture Technical Bulletin No. 1768. 1990, 235
- Sensor Based Nitrogen Fertilization Increasing Grain Protein Yield in Winter Wheat. **SKJØDT et al.** Risø-R-1389. Risø National Laboratory, 2003
- **SMITH et al.** Large-scale drivers of relationships between soil microbial properties and organic carbon across Europe. *Global Ecol Biogeogr,* 2021, vol. 30, 2070-2083
- **STAMATIADIS et al.** Variable-rate nitrogen fertilization of winter wheat under high spatial resolution. *Precision Agriculture,* 2020, vol. 21, 695-712
- **TEDONE, L. et al.** Nitrogen management strategy for optimizing agronomic and environmental performance of rainfed durum wheat under Mediterranean climate. *Journal of Cleaner Production,* 2017, https://doi.org/10.1016/j.jclepro.2017.11.215
- **TOSCANO et al.** A Precision Agriculture Approach for Durum Wheat Yield Assessment Using Remote Sensing Data and Yield Mapping. *Agronomy,* 2019, vol. 9, 437
- **TÓTH et al.** Continental-scale assessment of provisioning soil functions in Europe. *Ecological Processes,* 2013, vol. 2, 32
- **VIZZARI et al.** Sentinel 2-Based Nitrogen VRT Fertilization in Wheat: Comparison between Traditional and Simple Precision Practices. *Agronomy,* 2019, vol. 9, 278

- **ZECHA et al.** Utilisation of Ground and Airborne Optical Sensors for Nitrogen Level Identification and Yield Prediction in Wheat. *Agriculture,* 2018, vol. 8, 79

- **ZILLMANN et al.** Assessment of Cereal Nitrogen Requirements Derived by Optical On-the-Go Sensors on Heterogeneous Soils. *Agron. J.,* 2006, vol. 98, 682-690